# EUROPEAN PATENT SPECIFICATION

(11) **EP 3 435 145 B1**
(45) Date of publication and mention of the grant of the patent: **05.10.2022**
(21) Application number: 17182803.1
(22) Date of filing: 24.07.2017
(51) Int. Cl.: G02F 1/13, B32B 38/10, B32B 43/00, B32B 38/18

(54) **DEVICE AND METHOD FOR REMOVING FILM FROM A DISPLAY DEVICE**
VORRICHTUNG UND VERFAHREN ZUM ENTFERNEN EINES FILMS VON EINER ANZEIGEEINRICHTUNG
DISPOSITIF ET PROCEDE DE RETRAIT DE FILM A PARTIR DU DISPOSITIF D'AFFICHAGE

(43) Date of publication of application: 30.01.2019
(73) Proprietor: Vestel Elektronik Sanayi ve Ticaret A.S., 45030 Manisa (TR)
(72) Inventor: AKOGLU, Mustafa Serkan, 45030 Manisa (TR); KAYRAN, Özgür, 45030 Manisa (TR); YILMAZ, Ozan, 45030 Manisa (TR); TANRIVERDI, Ersin, 45030 Manisa (TR)
(74) Representative: Kehl, Ascherl, Liebhoff & Ettmayr Patentanwälte Partnerschaft mbB

(56) References cited:
- WO-A1-2014/185097
- CN-A- 103 407 279
- CN-B- 102 896 876
- US-A1- 2016 318 295

## Description

The present invention provides a film removing device for removing a film from a display according to claim 1 and a method of removing a film from a display according to claim 8 by means of the film removing device of claim 1.

### Background of the invention

Displays or display components are covered during the manufacturing process with a protective film. It is necessary to remove such a film during the manufacturing process. Such removing processes are carried out manually since the known devices have significant drawbacks. However, due to the manual interaction between the displays and humans , defects are often caused due to wrong treatment.

Document CN102896876A discloses a film tearing machine, which is suitable for removing a film on surface of a substrate, and comprises a carrier, a tearing-start device and a clamp, wherein the carrier has a carrier surface for carrying the substrate; the tearing-start device is located at one side of the carrier and has a movable tearing-start element which has a contact surface used for contacting edges of the film; and the clamp is provided with a movable mechanism so that the clamp can move to the upper side of the carrier surface or the clamp moves far away from a bearing surface. CN102896876A further discloses a film tearing method, and according to the method, the film tearing machine is utilized to remove the film on the substrate. The film tearing machine uses actions of the element, instead of using consumables, to remove the film on the substrate, thereby reducing film tearing cost, and automatically tearing the films.

Document CN 103 407 279 A discloses a film tearing machine which is suitable for removing a film on a surface of a substrate, and comprises a carrier, a tearing-start device and a clamp, wherein the carrier has a carrier surface for carrying the substrate; the tearing-start device is located at one side of the carrier and has a movable tearing-start element which has a contact surface used for contacting edges of the film; and the clamp is provided with a movable mechanism so that the clamp can move to the upper side of the carrier surface or the clamp moves far away from a bearing surface. The disclosure further discloses a film tearing method, and according to the method, the film tearing machine is utilized to remove the film on the substrate. The film tearing machine uses actions of the element, instead of using consumables, to remove the film on the substrate, thereby reducing film tearing cost, and automatically tearing the films.

Document WO 2014/185097 A1 discloses a detaching device for detaching from a first region of a flexible sheet piece a second region of the flexible sheet piece which is outside of the first region, said flexible sheet piece being a sheet piece, wherein the second region is connected to the first region by an adhesive layer provided on one surface side of the first region and second region in a state in which the second region is cut off from the first region. The detaching device includes an attachment surface, a chuck unit capable of chucking the second region of the sheet piece, and a moving device for separating the second region of the sheet piece from the first region of the sheet piece by moving the chuck unit and the attachment table relative to each other in the direction of the normal to the attachment surface in a state in which the second region of the sheet piece is chucked by the chuck unit.

Document US2016/318295A discloses a device for tearing off a polarizer and a method for tearing off a polarizer. The device for tearing off a polarizer comprising a tearing platform, a clamping module and a liquid injecting module, wherein the tearing platform is used to fix a glass panel, the clamping module is used to clamp the tearing corner of the polarizer which is adhered to the glass panel and has an adhesion defect, the liquid injecting module is used to spray a liquid onto the junction between the polarizer and the glass panel. According to an embodiment, the adhesive force between the polarizer and the glass panel can be reduced and the tearing efficiency can be improved.

Document CN204278701 discloses a polarizing film tear device comprising a base, a vacuum suction plate fixed on the base, a tear film device located on the upper part of the vacuum suction plate, a lower part of the vacuum suction plate and at least two mutually independent vacuum regions, and a vacuum chuck corresponding to each vacuum region, said vacuum chuck being connected to a vacuum pump through a solenoid valve; said vacuum chuck is made of an antistatic rubber material. The polarizing film tearing device avoids the phenomenon that the polarizing film causes the polarizer to deviate from and remove from the vacuum suction plate when tearing the release film.

Document CN204749458 discloses a tear plate device including a mounting plate, a horizontal drive mechanism mounted on the mounting plate, a vertical drive mechanism mounted on the drive end of the horizontal drive mechanism, a roller mounted on the drive end of the vertical drive mechanism, and a clamping clip, and a vacuum suction stage is provided at a position corresponding to the roller, and the surface of the roller is provided with double-sided adhesive.

Document CN205588750 discloses an automatic tearing device comprising: an automatic feeding mechanism for placing a workpiece to a placing plate of a processing platform; a processing platform comprising a rotary drive source, a turntable and a plurality of turntable mechanism for rotating the workpiece on the placing template, and a tear film mechanism for tearing the workpiece on the placement template.

### Object of the Invention

It is the object of the present invention to provide a film removing device for removing a film from a display and a method of removing a film from a display by means of said film removing device so that the device or method should be more efficient compared to the state of the art devices and methods.

### Description of the Invention

The before mentioned object is solved by a film removing device for removing a film from a display according to claim 1.

This solution is beneficial since due to the transfer mechanism a very reliable and exact striping of a film from a display can be caused. The film removing device of the invention is preferably used during LCD TV assembly; it automates the process of removing the adhesive film layer from the main LCD cell (display) and stores these films for later disposal.

The invention is suitable for the striping of displays which have adhesive protective films, in particularly made of at least one polymer material and/or made of at least paper material. The display is preferably more rigid compared to the film while the film preferably is paper-like.

Further preferred embodiments are defined by the dependent claims.

According to a preferred embodiment of the present invention the pulling element comprises a sticky contact element, wherein the sticky contact element is movable with respect to the film. The contact element preferably comprises an adhesive section that forms a sticky surface of the contact element. The adhesive section can be replaced or conditioned. This embodiment is beneficial since the film can be pulled off from display in case the adhesive force between the contact element and the film is higher compared to the adhesive force between the film and the display.

The contact element is according to a further preferred embodiment of the present invention rotatable. The contact element can be pressed against the film arranged on the display display and is rotatable due to a relative movement between the positioning unit and the contact element. This embodiment is beneficial since the film can be at least sectional and preferably fully wound around the contact element. Thus, due to friction and/or adhesive force between the contact element and the film the contact element and the positioning unit can be spaced apart from each other for tensioning the film . Thus, the film is further striped from the display.

The contact element is according to a further embodiment of the present invention lockable, in particularly to prevent rotation of the contact element, wherein the contact element is at least locked while the pulling element is spaced apart from the positioning means. This embodiment is beneficial since the film cannot unwind from the contact element.

The separating means comprises according the present invention comprises a separation element to be moved between film and the display , wherein the separation element is moved by a transportation unit. This is beneficial since the contact element still holds the film and the separation element can be moved on a fixed path for separating the remaining film sections from the display.

The transportation unit comprises according to a preferred embodiment of the present invention at least one linear actuator and in particularly two or at least two linear actuators, for moving the separation element along a predefined path. The linear actuator is preferably arranged along a preferably rigid structure. The separation element is preferably transported during removing of the film in one plane, wherein the positioning unit is preferably arranged on one side of said plane and the contact element is preferably arranged on the other side of said plane.

According to a further embodiment of the present invention the separation element is a cylinder element. The separation element is preferably rotatable, particularly by means of an electric or pneumatic or hydraulic actuator. The rotation speed can be preferably set in dependency of the transportation speed. The separation element is preferably covered or coated by means of a friction reduction material. The friction reduction material preferably is Polytetrafluoroethylene or the like. Alternative the surface quality of at least sections of the separation element which are contacting the film are having a roughness average value (Ra) of less than 0,8 or less than 0,4 or less than 0,2 or less than 0,1.

The separation element is according to a further preferred embodiment of the present invention arranged in an angle between 30° and 60°, in particularly in an angle of 45°, with respect to the latitudinal direction of the display which extends along the longest side of the display , wherein the height direction is orthogonal to the latitudinal direction. This embodiment is beneficial since the contact area between film increases from an initial minimum to a maximum and decreases from the maximum to a further minimum, wherein the further minimum is preferably smaller than the initial minimum. Thus, the forces applied to the film and therefore indirectly to the display can be controlled. The transportation speed of the separation element can be set up in dependency of the contact between the film and the separation element. Additionally, or alternatively one or multiple sensors for detecting a force applied to the separation element during removing of the film is/are provided, wherein the separation element can be moved in dependency of the detected force.

The transportation unit is according to the present invention arranged in a fixed manner at the holding structure, wherein the separation element, the positioning unit and the receiving means are arranged in movable manner with respect to the holding structure. This embodiment is beneficial since many different relative movements can be caused. Thus, the device can be set up to remove multiple different films.

The receiving means comprises according to the present invention a vacuum unit for holding the film by means of vacuum. This is beneficial since the film can be easily positioned in different locations without damaging it.

The positioning unit comprises according to the present invention a first multi-axis robot arm for moving the display from a supply means to the predefined position and from the predefined position to a further processing position. This is beneficial since the display can be positioned in a desired position due to the multi-axis robot.

The receiving means comprises according to the present invention a second multi-axis, particularly a 5- or 6-axis, robot arm for moving the vacuum unit holding the received film from a pre-defined receiving position to a storage position for positioning the film at the storage position. This is beneficial since the removed film can be positioned in a desired position due to the multi-axis robot.

The before mentioned object is also solved by the method for removing a film from a display defined in claim 8.

The film is according to a preferred embodiment of the present invention removed from the display on which a film is arranged in a predefined time interval after the positioning of the display at the predefined position.

Further benefits, goals and features of the present invention will be described by the following specification of the attached figures, in which exemplarily components of the invention are illustrated. Components of the device and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

- Fig. 1a: shows a perspective view of an example of a device according to the present invention;
- Fig. 1b: shows a top view of the device shown in fig. 1a;
- Fig. 1c: shows a side view of the device shown in fig. 1a;
- Fig. 1d: shows a front view of the device shown in fig. 1a;
- Fig. 2a: shows a perspective view of an example of a pulling element;
- Fig. 2b: shows a top view of the pulling element shown in fig. 2a;
- Fig. 2c: shows a side view of the pulling element shown in fig. 2a;
- Fig. 2d: shows a front view of the pulling element shown in fig. 2a;
- Fig. 3: shows a perspective view of a positioning unit of the device shown in fig. 1a; and
- Fig. 4: shows a perspective view of a receiving means and a rigid structure holding a transport mechanism for moving a separating element.

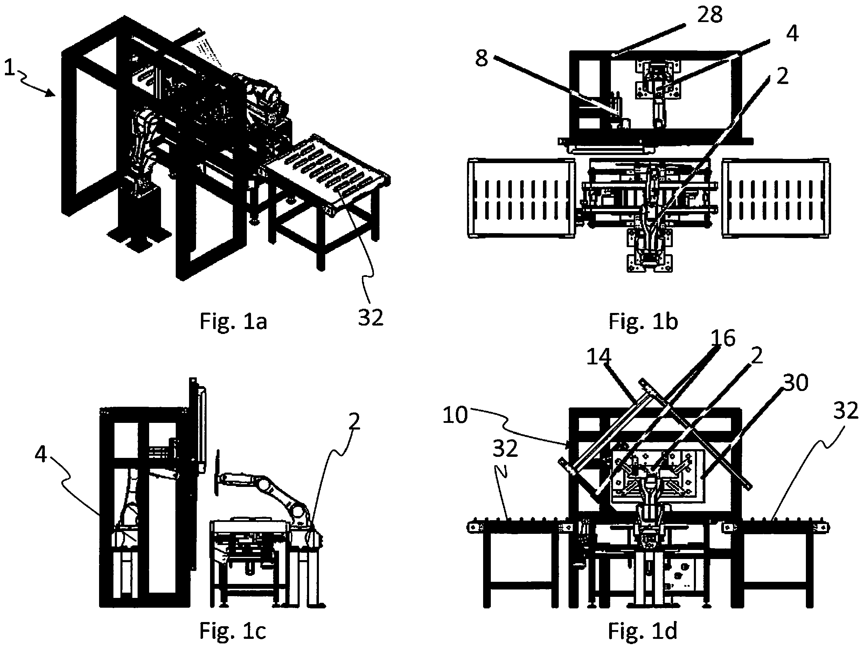

Fig. 1a-1d show different views of an example of a device 1 according to the invention.

The device 1 comprises a positioning unit 2, in particular a 6-axis robot, that takes a display having a film applied from a supply unit 32 and positions it in front of a pulling element 8. A separating means 10 transfers the film from the display to a receiving means 4, in particular a 6-axis robot. The positioning unit 2 and/or the receiving means 4 is/are comprises a vacuum holder 30, 31.

Thus, the positioning unit 2 or cell holder robot allows the corner of the protective film to wrap around the contact element 12 of pulling element 8 or sticky film corner delaminator cylinder preferably by dragging with a small pressure starting from the corner and towards the center of the means, in particularly cell.

Locking means 24 or bearing pneumatic cylinders for locking the film corner delaminator moves forward to prevent a rotation of the contact element 12 of pulling element 8 respectively of the sticky film corner delaminator cylinder.

The positioning unit 2 respectively cell holder robot preferably opens up a little backwards, in particularly up to 5cm or up to 10cm or up to 20cm or up to 30cm to create a wide gap where the separating means 10 or cylinders for separating the cell and protective film can enter. Position unit 2 or cell holder robot and pulling element 8 respectively pneumatic design for film corner delaminator moves forward, in particularly together, to approach the receiving means 4 respectively robotic film vacuum holder.

Separating means 10, in particular separating element 14 respectively cylinders for separating the cell and protective film, removes all the protective film from the display cell and causes the receiving means 4 respectively robotic film vacuum holder to hold the protective film by moving from corner to comer between the cell and the receiving means 4 respectively robotic film vacuum holder with the help of a transportation unit 16 respectively linear modules.

Positioning means 2 or cell holder robot puts the film dismantled cell where it should be placed.

Locking means 24 respectively bearing pneumatic cylinders for locking the film corner delaminator respectively the pulling means 8 opens the latch to allow the film to be thrown respectively released.

Receiving means 4 respectively protective film holder robot preferably keeps the film in a vacuum and rips it from the pulling element 8 respectively sticky film corner delaminator cylinder and stacks it in a storage place which can be part of a security fence 28.

When the film is stacked up to the spring stroke between the flange of the receiving means 4 respectively the protective film holder robot and the robotic film vacuum holder the stacked films can be disposed or conditioned collectively, in particularly by a specific unit or a cleaning assistant

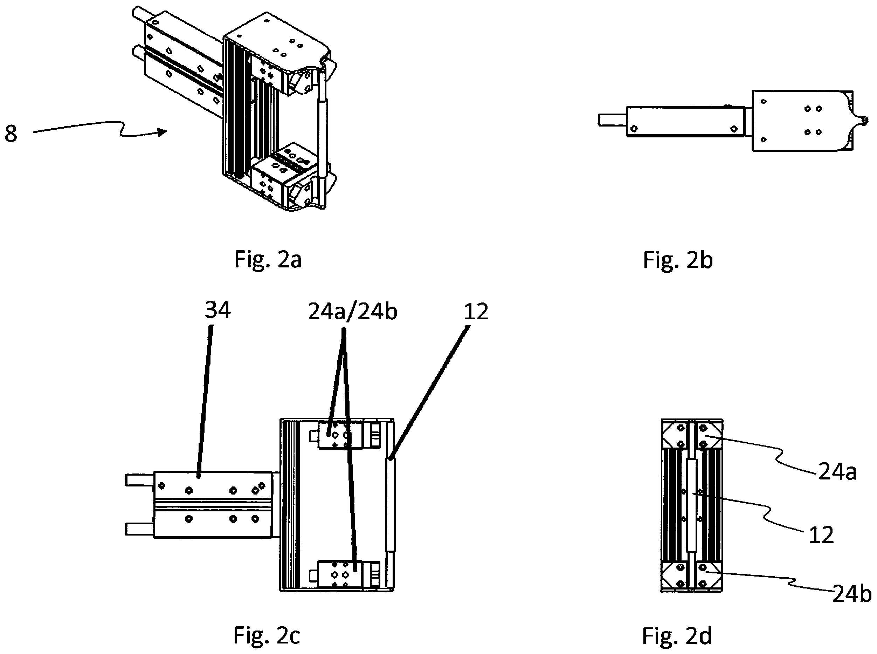

Fig. 2a-2d show different views of an example of a pulling means 8. The pulling means 8 comprises an actuator means 34 for moving the contact element 12 back and forth. The contact element 12 comprises an adhesive surface for bonding with film . The positioning unit 2 moves according to a preferred embodiment the display relative to the contact element 12 to wind the film at least partly around the contact element 12, wherein the contact element 12 rotates during winding. The rotating movement is locked after the film is at least partly wound around the contact element. Locking preferably takes place by locking means 24a, 24b. Said locking means 24a/24b are preferably pneumatically or electrically actuatable. Due to an actuation, the locking means 24a/24b are preferably extended to cause a friction fit and/or form closure with the contact element 12. Actuator means 34 preferably moves the contact element 12 away from the positioning unit 2, thus a gap between the contact element 12 and the positioning unit 2 results. It is alternatively possible that the pulling element 8 is arranged in a fixed manner (only rotation of the contact element is lockable and unlockable) and movements with respect to the pulling element 8 are caused by the positioning unit 2. The separation element 14 is moved by means of transportation unit 14, in particular one or two straight guide rails. Thus, separation element 14 is brought into contact with the film and causes striping of the film .

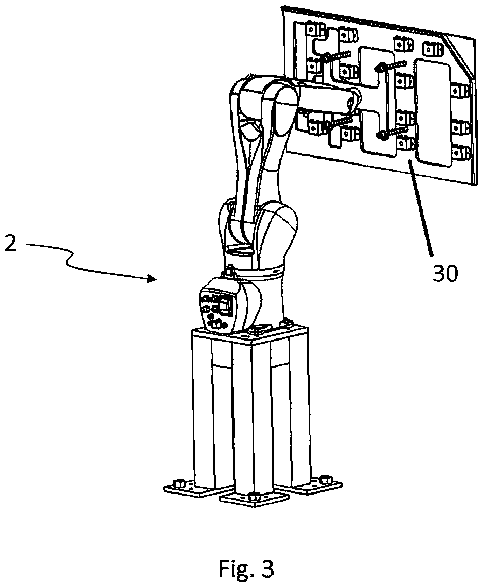

Fig. 3 shows an example of the positioning unit 2.

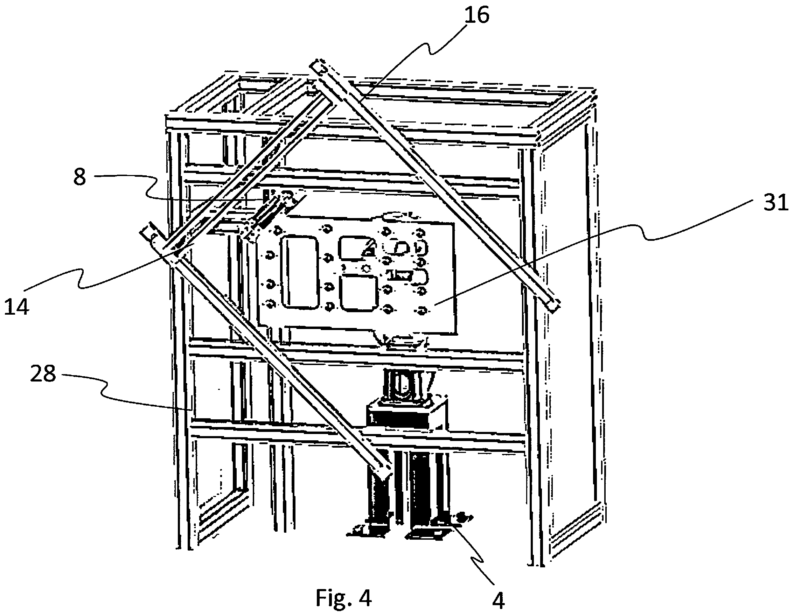

Fig. 4 shows an example of the receiving unit 4 and a structure or security fence 28 arranged around the receiving means 4. The transportation unit 16 for transporting respectively moving the separation means 10 is preferably arranged at the structure.

The film removing device 1 according to the invention comprises at least a positioning unit 2 for arranging a display on which a film is arranged in a predefined position, a receiving means 4 for receiving the film, a transfer mechanism 6 for transferring the film from the to the receiving means 4, wherein the transfer mechanism 6 comprises a pulling element 8 for initially pulling a section of the film away from the display , and a separating means 10 to be moved between the section of the film which is pulled away from the display for separating the sections of the film remaining attached to the display from the display.

### List of reference numbers

- 1: film removing device
- 2: positioning unit
- 4: receiving means
- 6: transfer mechanism
- 8: pulling element
- 10: separating means
- 12: contact element
- 14: separation element
- 16: transportation unit
- 18: holding structure
- 20: first multi-axis robot
- 22: second multi-axis robot
- 24: locking means / bearing pneumatic cylinders for locking the film corner delaminator / pulling means
- 26: storage place
- 28: security fence
- 30: carrying element / FDM plate of a vacuum holder of positioning unit
- 31: carrying element / FDM plate of a vacuum holder of receiving means
- 32: supply unit
- 34: Bearing Pneumatic Cylinder for Moving the Film Corner Delaminator / pulling means

## Claims

1. A film removing device (1) for removing a film from a display, at least comprising
a positioning unit (2) adapted to position a display , on which a film is arranged, in a predefined position;
a receiving means (4) adapted to receive the film;
a transfer mechanism (6) adapted to transfer the film from the display to the receiving means (4); wherein the transfer mechanism (6) comprises a pulling element (8) adapted to initially pull a section of the film away from the display, and a separating means (10) adapted to be moved between that section of the film which has been pulled away from the display and the display in order to separate those sections of the film remaining attached to the display from the display ;
wherein the separating means (10) comprises a separation element (14) adapted to be moved between the film and the display, wherein the separation element (14) is moved by a transportation unit (16) ;
**characterised in that:**
the receiving means (4) comprises a vacuum unit for holding the film by means of a vacuum; and
**in that** the transportation unit (16) is arranged in a fixed manner at a holding structure (18);
wherein the separation element 14), the positioning unit (2) and the receiving means (4) are arranged in a movable manner with respect to the holding structure (18) ;
wherein the positioning unit (2) comprises a first multi-axis robot arm (20) for moving the display from a supply means to the predefined position and from the predefined position to a further processing position; and
wherein the receiving means (4) comprises a second multi-axis robot arm (22) for moving the vacuum unit holding the received film from a pre-defined receiving position to a storage position in order to position the film at the storage position.

2. The film removing device according to claim 1, wherein the pulling element (8) comprises a sticky contact element (12), wherein the sticky contact element (12) is movable with respect to the film.

3. The film removing device according to claim 2, wherein the contact element (12) is rotatable, wherein the contact element (12) can be pressed against the film arranged on the display and is rotatable due to a relative movement between the positioning unit (2) and the contact element (12).

4. The film removing device according to claim 3, wherein the contact element (12) is lockable to prevent rotation, wherein the contact element (12) is at least locked while the pulling element (8) is spaced apart from the positioning unit (2)

5. The film removing device according to claim 1, wherein the transportation unit (16) comprises at least one linear actuator (18) for moving the separation element (14) along a predefined path.

6. The film removing device according to claim 5, wherein the separation element (14) is a cylinder element, in particular rotatable.

7. The film removing device according to claim 6, wherein the separation element (14) is arranged at an angle between 30° and 60°, in particular at an angle of 45°, with respect to the latitudinal direction of the display that extends along the longest side of the display.

8. A method of removing a film from a display by means of the film-removing device of claim 1, at least comprising the steps of:
positioning a display , on which a film is arranged, in a predefined position, transferring the film from the display to the receiving means (4) by means of the transfer mechanism (6), pulling initially a section of the film away from the display by means of the pulling element (6), moving the separating means (10) between the section of the film which is pulled away from the display and the display in order to separate the remaining sections of the film from the display ,
wherein
the positioning of the display on which the film is arranged takes place by means of the positioning unit (2) wherein the positioning unit (2) comprises the first multi-axis robot arm (20) and the receiving means comprises the second multi-axis robot arm (22),
wherein the positioning unit (2) positions the display , on which a film is arranged, for initially pulling a section of the film away from the display by means of the pulling element (8) in a first position relative to the receiving means (4),
wherein the positioning unit (2) positions the display for removing the remaining section of the film from the display in a second position relative to the receiving means (4), and
wherein the first relative position and the second relative position at least differ in a distance between the positioning unit (2) and the receiving means (4).

9. The method according to claim 8, wherein the film is removed from the display in a predefined time interval after the positioning of the display at the predefined position.

## Patentansprüche

1. Filmentfernvorrichtung (1) zum Entfernen eines Films von einem Display,
die mindestens aufweist
eine Positionierungseinheit (2), die angepasst ist, um ein Display, auf dem ein Film angeordnet ist, in einer vordefinierten Position zu positionieren,
ein Aufnahmemittel (4), das angepasst ist, um den Film aufzunehmen,
einen Übertragungsmechanismus (6), der angepasst ist, um den Film von dem Display zu dem Aufnahmemittel (4) zu übertragen,
wobei der Übergabemechanismus (6) ein Zugelement (8) aufweist, das angepasst ist, um zunächst einen Abschnitt des Films von dem Display wegzuziehen,
und ein Trennmittel (10), das angepasst ist, um zwischen dem Abschnitt des Films, der von dem Display weggezogen wurde, und dem Display bewegt zu werden, um die Abschnitte des Films, die an dem Display befestigt bleiben, von dem Display zu trennen;
wobei das Trennmittel (10) ein Trennelement (14) aufweist, das angepasst ist, um zwischen der Folie und dem Display bewegt zu werden, wobei das Trennelement (14) durch eine Transporteinheit (16) bewegt wird;
**dadurch gekennzeichnet, dass**
das Aufnahmemittel (4) eine Vakuumeinheit zum Halten des Films mittels eines Vakuums aufweist; und dass
die Transporteinheit (16) ortsfest an einer Haltestruktur (18) angeordnet ist; wobei das Trennelement (14), die Positioniereinheit (2) und die Aufnahme (4) gegenüber der Haltestruktur (18) beweglich angeordnet sind
wobei die Positioniereinheit (2) einen ersten mehrachsigen Roboterarm (20) aufweist, um das Display von einer Zuführeinrichtung zu der vordefinierten Position und von der vordefinierten Position zu einer weiteren Verarbeitungsposition zu bewegen; und wobei
das Aufnahmemittel (4) einen zweiten mehrachsigen Roboterarm (22) aufweist, um die Vakuumeinheit, die den aufgenommenen Film hält, von einer vordefinierten Aufnahmeposition zu einer Lagerposition zu bewegen, um den Film in der Lagerposition zu positionieren.

2. Die Filmentfernvorrichtung gemäß Anspruch 1,
wobei das Zugelement (8) ein klebriges Kontaktelement (12) aufweist, wobei das klebrige Kontaktelement (12) in Bezug auf die Folie beweglich ist.

3. Die Filmentfernvorrichtung gemäß Anspruch 2,
wobei das Kontaktelement (12) drehbar ist, wobei das Kontaktelement (12) gegen die auf dem Display angeordnete Folie gedrückt werden kann und durch eine Relativbewegung zwischen der Positioniereinheit (2) und dem Kontaktelement (12) drehbar ist.

4. Die Filmentfernvorrichtung gemäß Anspruch 3,
wobei das Kontaktelement (12) zur Verhinderung einer Drehung verriegelbar ist, wobei das Kontaktelement (12) zumindest verriegelt ist, während das Zugelement (8) von der Positioniereinheit (2) beabstandet ist

5. Die Filmentfernvorrichtung gemäß Anspruch 1,
dass die Transporteinheit (16) mindestens einen linearen Aktuator (18) aufweist, um das Trennelement (14) entlang einer vorgegebenen Bahn zu bewegen.

6. Die Filmentfernvorrichtung gemäß Anspruch 5,
wobei das Trennelement (14) ein, insbesondere drehbares, Zylinderelement ist.

7. Die Filmentfernvorrichtung gemäß Anspruch 6,
wobei das Trennelement (14) in einem Winkel zwischen 30° und 60°, insbesondere in einem Winkel von 45°, zur Breitenrichtung des Displays angeordnet ist, die sich entlang der längsten Seite des Displays erstreckt.

8. Verfahren zum Entfernen eines Films von einem Display mit Hilfe der Filmentfernvorrichtung nach Anspruch 1,
das mindestens die folgenden Schritte aufweist:
Positionieren eines Displays, auf dem ein Film angeordnet ist, in einer vordefinierten Position,
Überführen des Films von dem Display zu der Aufnahmeeinrichtung (4) mittels des Überführungsmechanismus (6),
anfängliches Abziehen eines Abschnitts des Films von dem Display mittels des Abziehelements (6),
Bewegen des Trennmittels (10) zwischen dem vom Display weggezogenen Abschnitt der Folie und dem Display, um die restlichen Abschnitte der Folie vom Display zu trennen, wobei die Positionierung des Displays, auf dem die Folie angeordnet ist, mittels der Positioniereinheit erfolgt, wobei die Positioniereinheit (2) den ersten mehrachsigen Roboterarm (20) aufweist, und
die Aufnahmeeinrichtung den zweiten mehrachsigen Roboterarm (22) aufweist,
wobei die Positioniereinheit (2) das Display, auf dem eine Folie angeordnet ist, zum anfänglichen Abziehen eines Abschnitts der Folie von dem Display mittels des Zugelements (8) in einer ersten Position relativ zu der Aufnahmeeinrichtung (4) positioniert,
wobei die Positioniereinheit (2) das Display zum Abziehen des verbleibenden Folienabschnitts von dem Display in einer zweiten Relativposition zu der Aufnahme (4) positioniert, und
wobei sich die erste Relativposition und die zweite Relativposition zumindest in einem Abstand zwischen der Positioniereinheit (2) und dem Aufnahmemittel (4) unterscheiden.

9. Das Verfahren gemäß Anspruch 8,
wobei die Folie in einem vordefinierten Zeitintervall nach der Positionierung des Displays an der vordefinierten Position von dem Display entfernt wird.

## Revendications

1. Dispositif de retrait de film (1) pour retirer un film d'un écran,
qui comprend au moins
une unité de positionnement (2) adaptée pour positionner un écran sur lequel est disposé un film dans une position prédéfinie,
un moyen de réception (4) adapté pour recevoir le film,
un mécanisme de transfert (6) adapté pour transférer le film de l'écran au moyen de réception (4),
le mécanisme de transfert (6) comprenant un élément de traction (8) adapté pour tirer initialement une partie du film hors de l'écran,
et un moyen de séparation (10) adapté pour être déplacé entre la partie du film qui a été retirée de l'affichage et l'affichage afin de séparer de l'affichage les parties du film qui restent attachées à l'affichage ;
dans lequel le moyen de séparation (10) comprend un élément de séparation (14) adapté pour être déplacé entre le film et l'affichage, l'élément de séparation (14) étant déplacé par une unité de transport (16) ;
**caractérisé en ce que**
le moyen de réception (4) comprend une unité de vide pour maintenir le film au moyen d'un vide ; et **en ce que**
l'unité de transport (16) est disposée de manière fixe sur une structure de support (18) ; l'élément de séparation (14), l'unité de positionnement (2) et le réceptacle (4) étant disposés de manière mobile par rapport à la structure de support (18).
dans lequel l'unité de positionnement (2) comprend un premier bras de robot multiaxial (20) pour déplacer l'écran d'un dispositif d'alimentation à la position prédéfinie et de la position prédéfinie à une autre position de traitement ; et dans lequel
le moyen de prélèvement (4) comprend un second bras robotisé multiaxial (22) pour déplacer l'unité à vide qui maintient le film prélevé d'une position de prélèvement prédéfinie à une position de stockage afin de positionner le film dans la position de stockage.

2. Le dispositif de retrait de film selon la revendication 1,
dans lequel l'élément de traction (8) comprend un élément de contact collant (12), l'élément de contact collant (12) étant mobile par rapport au film.

3. Le dispositif de retrait de film selon la revendication 2,
dans lequel l'élément de contact (12) est rotatif, l'élément de contact (12) pouvant être pressé contre le film placé sur l'écran et pouvant être tourné par un mouvement relatif entre l'unité de positionnement (2) et l'élément de contact (12).

4. Le dispositif de retrait de film selon la revendication 3,
dans lequel l'élément de contact (12) peut être verrouillé pour empêcher la rotation, l'élément de contact (12) étant au moins verrouillé tandis que l'élément de traction (8) est espacé de l'unité de positionnement (2).

5. le dispositif de retrait de film selon la revendication 1,
en ce que l'unité de transport (16) comprend au moins un actionneur linéaire (18) pour déplacer l'élément de séparation (14) le long d'une trajectoire prédéterminée.

6. Le dispositif de retrait de film selon la revendication 5,
dans lequel l'élément de séparation (14) est un élément cylindrique, en particulier un élément cylindrique rotatif.

7. Le dispositif de retrait de film selon la revendication 6,
dans lequel l'élément de séparation (14) est disposé selon un angle compris entre 30° et 60°, en particulier selon un angle de 45°, par rapport à la direction de la largeur de l'écran qui s'étend le long du côté le plus long de l'écran.

8. Méthode pour enlever un film d'un écran à l'aide du dispositif d'enlèvement de film selon la revendication 1,
qui comprend au moins les étapes suivantes :
Positionner un présentoir sur lequel est placé un film dans une position prédéfinie,
transfert du film de l'écran vers le dispositif de réception (4) au moyen du mécanisme de transfert (6),
décoller initialement une partie du film de l'écran au moyen de l'élément de décollage (6),
le déplacement du moyen de séparation (10) entre la partie du film retirée de l'écran et l'écran afin de séparer les parties restantes du film de l'écran, le positionnement de l'écran sur lequel le film est placé étant effectué au moyen de l'unité de positionnement, l'unité de positionnement (2) comprenant le premier bras robotisé multiaxial (20), et
l'unité de réception comprend le deuxième bras de robot multiaxial (22),
l'unité de positionnement (2) positionne l'écran, sur lequel un film est disposé, dans une première position par rapport au dispositif de réception (4) pour retirer initialement une partie du film de l'écran au moyen de l'élément de traction (8),
l'unité de positionnement (2) positionnant l'écran dans une deuxième position relative par rapport au réceptacle (4) pour retirer la partie restante du film de l'écran, et
dans lequel la première position relative et la deuxième position relative diffèrent au moins par une distance entre l'unité de positionnement (2) et le moyen de réception (4).

9. La méthode selon la revendication 8,
dans lequel le film est retiré de l'écran à un intervalle de temps prédéfini après le positionnement de l'écran à la position prédéfinie.
